# EUROPEAN PATENT APPLICATION

(11) **EP 4 597 457 A1**
(43) Date of publication of application: **06.08.2025**
(21) Application number: 24223734.5
(22) Date of filing: 30.12.2024
(51) Int. Cl.: G06V 20/58, G06V 10/80, G06V 10/75, G01S 13/86, G01S 13/931, G01S 17/86

(54) **METHOD FOR OBTAINING MISSED VISUAL DETECTION TARGETS, SMART DEVICE, AND STORAGE MEDIUM**

(30) Priority: 30.01.2024 CN 202410129333
(71) Applicant: Anhui NIO Autonomous Driving Technology Co., Ltd., Hefei, Anhui 230601 (CN)
(72) Inventor: CHENG, Zhiwei, Hefei, Anhui Province, 230601 (CN); WANG, Baichao, Hefei, Anhui Province, 230601 (CN)
(74) Representative: Vossius & Partner Patentanwälte Rechtsanwälte mbB

(57) **Abstract**

The invention relates to the field of autonomous driving technologies, and particularly provides a method for obtaining missed visual detection targets, a smart device, and a storage medium. The method provided in the invention is applied to a smart device configured with a visual sensor and a radar. The method includes: performing target perception on images collected by the visual sensor, to obtain visual perception targets of the images; performing target perception on point clouds collected by the radar, to obtain radar perception targets of the point clouds; performing association analysis on the radar perception targets and the visual perception targets to determine whether the radar perception target and the visual perception target are the same target; and obtaining a missed visual detection target from the radar perception target if the radar perception target and the visual perception target are not the same target.

## Description

The present application claims priority of Chinese patent application CN202410129333.8, filed on January 30, 2024, entitled with "Method for obtaining missed visual detection targets, smart device, and storage medium", the content of which is incorporated herein by reference in its entirety.

### TECHNICAL FIELD

The invention relates to the field of autonomous driving technologies, and in particular, to a method for obtaining missed visual detection targets, a smart device, and a storage medium.

### TECHNICAL BACKGROUND

During automatic driving control over a vehicle, visual sensors on the vehicle are usually used to perceive vehicles, pedestrians and other targets around the vehicle, which are visual perception targets, and then a driving path is planned for the vehicle based on these targets, such that the vehicle is controlled to drive autonomously according to the path. However, for some special vehicles (such as tricycles with special colors and texture, and profiled vehicles loaded with cargoes), pedestrians with different attire and postures, and other targets, the use of visual sensing for perception may easily lead to missed detection. In addition, the use of visual sensing for perception may also easily lead to missed detection of targets in backlight, glare, night, rainy, and other scenes. If the missed detection target is located on the driving path of the vehicle, there is a high risk of collision between the target and the vehicle, resulting in a traffic accident.

At present, there are mainly two conventional methods for obtaining missed visual detection targets. One method is performing manual search and discovery by autonomous driving testers, which is inefficient and fails to collect visual perception targets covering enough scenes. The other method is performing a search on actual images collected by the visual sensor by using missed detection targets images, to obtain, from targets in the actual images, targets similar to the missed detection targets in the missed detection target images and then use these similar targets as new missed detection targets. However, due to different acquisition viewing angles and lighting conditions, the targets in the actual images may seem similar to the missed detection targets, but it is actually completely different from the missed detection targets. In addition, scenes that result in missed detection of visual perception targets cannot be exhausted, and thus it is difficult to perform target search separately on images under each scene.

Accordingly, there is a need in the art for a new technical solution to solve the above problems.

### SUMMARY

To overcome the above disadvantages, the invention is provided to solve or at least partially solve the problem of how to obtain missed visual detection targets conveniently and accurately.

According to a first aspect, there is provided a method for obtaining missed visual detection targets, where the method is applied to a smart device configured with a visual sensor and a radar. The method includes:
performing target perception on images collected by the visual sensor, to obtain visual perception targets of the images;
performing target perception on a point clouds collected by the radar, to obtain radar perception targets of the point clouds;
performing association analysis on the radar perception targets and the visual perception targets to determine whether the radar perception target and the visual perception target are the same target; and
obtaining a missed visual detection target from the radar perception target if the radar perception target and the visual perception target are not the same target.

In one technical solution of the above method for obtaining missed visual detection targets, the performing association analysis on the radar perception targets and the visual perception targets includes: obtaining a visual perception target of each frame of image among consecutive multi-frame images, and separately performing association analysis on the radar perception target and the visual perception target of each frame of image; and
the method further includes: obtaining the missed visual detection target from the radar perception target if the radar perception target and the visual perception target of at least one frame of image are not the same target.

In one technical solution of the above method for obtaining missed visual detection targets, before the performing association analysis on the radar perception targets and the visual perception targets, the method further includes:
screening out and retaining visual perception targets located within a first preset range around the smart device; and
screening out and retaining radar perception targets located within a second preset range around the smart device.

In one technical solution of the above method for obtaining missed visual detection targets, the visual perception targets include forward visual perception targets and/or side-rear visual perception targets, and the screening out and retaining visual perception targets located within a first preset range around the smart device includes:
obtaining first lateral distances between the forward visual perception targets and the smart device, and screening out and retaining forward visual perception targets whose first lateral distance are less than a first set threshold; and
obtaining first linear distances between the side-rear visual perception targets and the smart device, and screening out and retaining side-rear visual perception targets whose first linear distance are less than a second set threshold,
where the forward visual perception targets are visual perception targets obtained by performing target perception on images collected by a forward visual sensor, and the forward visual sensor is a visual sensor on the smart device that is used to collect forward images of the smart device; and
the side-rear visual perception targets are visual perception targets obtained by performing target perception on images collected by a side-rear visual sensor, and the side-rear visual sensor is a visual sensor on the smart device that is used to collect side images and/or rear images of the smart device.

In one technical solution of the above method for obtaining missed visual detection targets, the radar perception targets include forward radar perception targets, and the screening out and retaining radar perception targets located within a second preset range around the smart device includes:
obtaining longitudinal distances, second lateral distances, and second linear distances between the forward radar perception targets and the smart device;
screening out and retaining a forward radar perception target with the smallest second linear distance; and
screening out and retaining forward radar perception targets whose longitudinal distance are less than a third set threshold and/or whose second lateral distance are less than a fourth set threshold,
where the forward radar perception targets are radar perception targets obtained by performing target perception on point clouds collected by a forward radar, and the forward radar is a Lidar located at a front end of the smart device.

In one technical solution of the above method for obtaining missed visual detection targets, the radar perception targets include side-rear radar perception targets, and the screening out and retaining radar perception targets located within a second preset range around the smart device includes:
identifying and removing ghost targets from the side-rear radar perception targets;
obtaining a road boundary of an environment in which the smart device is located; and
screening, from side-rear radar perception targets with the ghost targets removed, and retaining side-rear radar perception targets located between the smart device and the road boundary,
where the side-rear radar perception targets are radar perception targets obtained by performing target perception on point clouds collected by a side-rear radar, and the side-rear radar is a millimeter-wave radar located at a side end and/or rear end of the smart device.

In one technical solution of the above method for obtaining missed visual detection targets, the radar perception targets are forward radar perception targets, the visual perception targets are forward visual perception targets, and the performing association analysis on the radar perception targets and the visual perception targets includes:
obtaining radial distances and angles between the forward radar perception targets and the forward visual perception targets in a polar coordinate system; and
determining the forward radar perception target and the forward visual perception target as the same target if the radial distance is less than a fifth set threshold and the angle is less than a sixth set threshold,
where the forward visual perception targets are visual perception targets obtained by performing target perception on images collected by a forward visual sensor, and the forward visual sensor is a visual sensor on the smart device that is used to collect forward images of the smart device; and the forward radar perception targets are radar perception targets obtained by performing target perception on point clouds collected by a forward radar, and the forward radar is a radar located at a front end of the smart device.

In one technical solution of the above method for obtaining missed visual detection targets, the radar perception targets are side-rear radar perception targets, the visual perception targets are side-rear visual perception targets, and the performing association analysis on the radar perception targets and the visual perception targets includes:
obtaining an intersection over union and a Euclidean distance between the side-rear radar perception target and the side-rear visual perception target; and
determining the side-rear radar perception target and the side-rear visual perception target as the same target if the intersection over union is greater than a seventh set threshold and the Euclidean distance is less than an eighth set threshold,
where the side-rear visual perception targets are visual perception targets obtained by performing target perception on images collected by a side-rear visual sensor, and the side-rear visual sensor is a visual sensor on the smart device that is used to collect side and/or rear images of the smart device; and
the side-rear radar perception targets are radar perception targets obtained by performing target perception on point clouds collected by a side-rear radar, and the side-rear radar is a radar located at a side end and/or a rear end of the smart device.

According to a second aspect, there is provided a computer-readable storage medium. A plurality of program codes are stored in the computer-readable storage medium, and the program codes are adapted to be loaded and executed by at least one processor to perform the method in any one of the technical solutions of the above method for obtaining missed visual detection targets.

According to a third aspect, there is provided a smart device. The smart device includes: at least one processor; and a memory in communication connection with the at least one processor, where the memory stores a computer program that, when executed by the at least one processor, causes the processor to implement the method in any one of the technical solutions of the above method for obtaining missed visual detection targets.

The one or more technical solutions of the invention described above have at least one or more of the following beneficial effects.

In the technical solution for implementing the method for obtaining missed visual detection targets according to the invention, the method is applied to the smart device provided with the visual sensor and the radar. The method may include: performing target perception on the images collected by the visual sensor, to obtain the visual perception targets of the images; performing target perception on the point clouds collected by the radar, to obtain the radar perception targets of the point clouds; performing association analysis on the radar perception targets and the visual perception targets to determine whether the radar perception target and the visual perception target are the same target; and obtaining the missed visual detection target from the radar perception target if the radar perception target and the visual perception target are not the same target.

If the radar perception target and the visual perception target are not the same target, it indicates that this radar perception target, i.e., the missed detection target, is not detected by the visual sensor. In this case, the missed visual detection target can be obtained from this radar perception target. With the above embodiment, the missed visual detection targets can be obtained automatically and accurately with the radar perception targets and the visual perception targets, without requiring manual search and discovery, thereby significantly improving the efficiency in obtaining the missed detection targets. In addition, the above embodiment is not limited by a scene, and the missed visual detection targets under this scene can be obtained accurately as long as the scene is accessible to the smart device. This overcomes the drawbacks in the prior art that it is not possible to collect visual perception targets covering enough scenes.

### BRIEF DESCRIPTION OF THE DRAWINGS

The disclosed content of the invention will become more readily understood with reference to the accompanying drawings. Those skilled in the art readily understand that these accompanying drawings are merely for illustrative purposes and are not intended to limit the scope of protection of the invention. In the accompanying drawings:
FIG. 1 is a schematic flowchart of main steps of a method for obtaining missed visual detection targets according to an embodiment of the invention;
FIG. 2 is a schematic flowchart of main steps of screening radar perception targets and visual perception targets according to an embodiment of the invention;
FIG. 3 is a schematic diagram of a main flow of a method for obtaining missed visual detection targets when a smart device is a vehicle according to an embodiment of the invention;
FIG. 4 is a schematic diagram of a main flow of searching for missed visual detection targets from forward visual perception targets and side-rear visual perception targets according to an embodiment of the invention;
FIG. 5 is a schematic diagram of images collected by a visual sensor provided at a front end of a vehicle according to an embodiment of the invention;
FIG. 6 is a schematic diagram of images collected by a visual sensor provided on a side end of a vehicle according to an embodiment of the invention; and
FIG. 7 is a schematic diagram of a main structure of a smart device according to an embodiment of the invention.

### List of reference signs:

11: Memory; 12: Processor.

### DETAILED DESCRIPTION OF EMBODIMENTS

Some implementations of the invention are described below with reference to the accompanying drawings. Those skilled in the art should understand that these implementations are only used to explain the technical principles of the invention, and are not intended to limit the scope of protection of the invention.

In the description of the invention, a "processor" may include hardware, software, or a combination thereof. The processor may be a central processing unit, a microprocessor, a graphics processing unit, a digital signal processor, or any other suitable processor. The processor has a data and/or signal processing function. The processor may be implemented in software, hardware, or a combination thereof. A computer-readable storage medium includes any suitable medium that can store program code, such as a magnetic disk, a hard disk, an optical disc, a flash memory, a read-only memory, or a random access memory.

The related user personal information that may be involved in the embodiments of the invention is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user personal information processed in the invention varies depending on the specific product/service scenario, and shall be subject to the specific scenario in which the user uses the product/service. It may involve account information, device information, driving information, vehicle information, or other related information of the user. The user's personal information and processing thereof shall be treated in the invention with a high degree of diligence.

The invention attaches great importance to the security of the user personal information, and reasonable and feasible security protection measures that comply with industry standards have been taken to protect information of the user and prevent the personal information from unauthorized access, public invention, use, modification, damage or loss.

An embodiment of a method for obtaining missed visual detection targets according to the invention is described below. In this embodiment, the method for obtaining missed visual detection targets is applied to a smart device, and the smart device has a visual sensor and a radar provided thereon. The smart device may include a driving device, a smart car, a robot, etc.

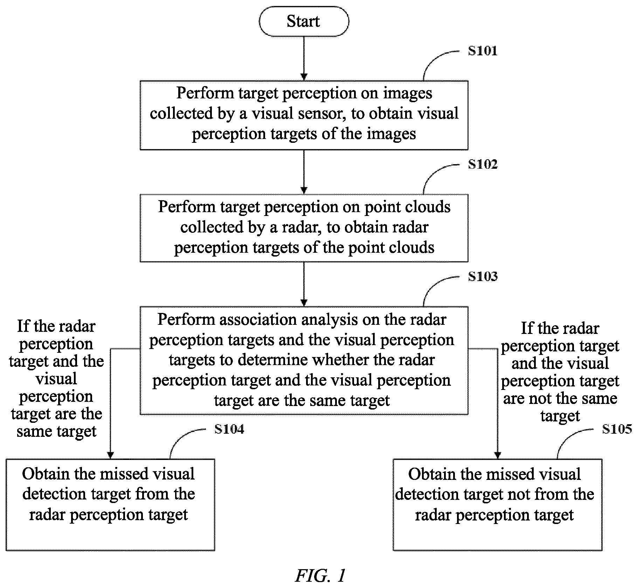

Referring to FIG. 1, FIG. 1 is a schematic flowchart of main steps of a method for obtaining missed visual detection targets according to an embodiment of the invention. As shown in FIG. 1, the method for obtaining missed visual detection targets in this embodiment of the invention mainly includes steps S 101 to S 105 below.

Step S101: Perform target perception on images collected by the visual sensor, to obtain visual perception targets of the images.

In this embodiment, the target perception can be performed on the images collected by the visual sensor by using a conventional image target perception method. For example, the target perception can be performed on the images by using a visual target detection network constructed with a neural network, and the detected targets can be used as the visual perception targets.

Step S 102: Perform target perception on point clouds collected by the radar, to obtain radar perception targets of the point clouds.

In this embodiment, the target perception can be performed on the point clouds collected by the radar by using a conventional radar target perception method. For example, for a Lidar, the target perception can be performed on the point clouds by using a point cloud target detection network constructed with a neural network, and the detected targets are used as the radar perception targets.

Step S103: Perform association analysis on the radar perception targets and the visual perception targets to determine whether the radar perception target and the visual perception target are the same target. If the radar perception target and the visual perception target are the same target, the process proceeds to step S104. If the radar perception target and the visual perception target are not the same target, the process proceeds to step S105.

When the association analysis is performed on the radar perception targets and the visual perception targets, feature information about the radar perception targets and the visual perception targets can be obtained, and then a similarity of the feature information can be obtained. Based on the similarity, it can be determined whether the radar perception target and the visual perception target are the same target. If the similarity is greater (e.g., greater than a set threshold), the radar perception target and the visual perception target are the same target. Otherwise, the radar perception target and the visual perception target are not the same target.

Those skilled in the art can flexibly set the type of the feature information to be obtained and select the method for obtaining the similarity of the feature information according to actual needs. This is not specifically limited in this embodiment, as long as the similarity of the radar perception target and the visual perception target can be obtained.

Step S104: Obtain missed visual detection targets from the radar perception targets.

If the radar perception target and the visual perception target are not the same target, it indicates that the radar perception target is not detected by the visual sensor, and then the radar perception target is a missed detection target. Therefore, the missed visual detection target can be obtained from the radar perception target.

In some implementations, when the missed visual detection target is obtained, a pose of the radar perception target may be first obtained and then converted, by means of coordinate system conversion, onto the images collected by the visual sensor to obtain a pose of the radar perception target on the image, and then an image area where the pose is located can be obtained as the missed visual detection target.

Step S105: Obtain missed visual detection targets not from the radar perception target.

If the radar perception target and the visual perception target are the same target, it indicates that the radar perception target is detected by the visual sensor, and then there is no missed detection.

Based on the method described in the above steps S 101 to S105, the missed visual detection targets can be obtained automatically and accurately with the radar perception targets and the visual perception targets, without requiring manual search and discovery, thereby significantly improving the efficiency in obtaining the missed detection targets. In addition, the above method is not be limited by a scene, and the missed visual detection targets under this scene can be obtained accurately as long as the scene is accessible to the smart device. A screener may be provided on the smart device. After the missed visual detection target is obtained, the screener may record information (such as images or radar point clouds) about the missed visual detection target, and then upload, to a remote server, the information about the missed visual detection target that is recorded over a period of time. A user can obtain the information from the remote server and analyze the missed visual detection targets, to improve the visual target perception method, so as to avoid missed detection of similar targets.

The above step S 103 is further described below.

In some implementations of the above step S103, when association analysis is performed on the radar perception targets and the visual perception targets, a visual perception target may be obtained for each frame of image among consecutive multi-frame images, and then the association analysis is separately performed on the radar perception target and the visual perception target of each frame of image, where the association analysis is performed on the visual perception target of each frame of image in the same way.

In this case, if the radar perception target and the visual perception target of at least one frame of image are not the same target, the missed visual detection target is obtained from the radar perception target. Otherwise, the missed visual detection target is not obtained from the radar perception target.

When the visual sensor collects images, a target in the images may be made unclear or obscured due to factors such as a viewing angle or light. If the association analysis is performed on this target and the radar perception target, a false determination may be made. For example, the two are analyzed to be the same target, but they are actually not the same target. With the above implementation, the association analysis of the radar perception target and the visual perception target of consecutive multi-frame images can avoid the false determination to the greatest extent, and the accuracy of the association analysis can be ensured as much as possible, thereby obtaining an accurate missed visual detection target.

In some implementations of the above step S 103, the radar perception targets are forward radar perception targets, and the visual perception targets are forward visual perception targets. The forward visual perception targets are visual perception targets obtained by performing target perception on images collected by a forward visual sensor, and the forward visual sensor is a visual sensor on the smart device that is used to collect forward images of the smart device. The forward radar perception targets are radar perception targets obtained by performing target perception on point clouds collected by a forward radar, and the forward radar is a radar located at a front end of the smart device.

In this implementation, the association analysis of the forward radar perception targets and the forward visual perception targets may be performed through the following steps S 1031 to S 1034.

Step S 1031: Obtain radial distances and angles between the forward radar perception targets and the forward visual perception targets in a polar coordinate system.

Specifically, the forward radar perception targets and the forward visual perception targets can be converted into the polar coordinate system based on their poses, and then the radial distances and the angles between the forward radar perception targets and the forward visual perception targets can be obtained.

The radial distance is a difference between a polar diameter of the forward radar perception target in the polar coordinate system and a polar diameter of the forward visual perception target in the polar coordinate system.

The angle is a difference between a polar angle of the forward radar perception target in the polar coordinate system and a polar angle of the forward visual perception target in the polar coordinate system.

Step S1032: Determine whether the radial distance is less than a fifth set threshold and the angle is less than a sixth set threshold. If the radial distance is less than the fifth set threshold and the angle is less than the sixth set threshold, the process proceeds to step S1033. If the radial distance is not less than the fifth set threshold or the angle is not less than the sixth set threshold, the process proceeds to step S1034.

Step S1033: Determine that the forward radar perception target and the forward visual perception target are the same target. If the radial distance is less than the fifth set threshold, it indicates that the polar diameters of the forward radar perception target and the forward visual perception target are relatively close; and if the angle is less than the sixth set threshold, it indicates that the polar angles of the forward radar perception target and the forward visual perception target are relatively close. When the polar diameters and the polar angles are both relatively close, it indicates that the forward radar perception target and the forward visual perception target are the same point in the polar coordinate system, and thus are the same target.

Step S1034: Determine that the forward radar perception target and the forward visual perception target are not the same target. When either or both of the polar diameters and the polar angles are not close, it indicates that the forward radar perception target and the forward visual perception target are not the same point in the polar coordinate system, and thus are not the same target.

When visual perception targets are obtained, there are more or less problems with depth information of the targets. In particular, remote visual perception targets may have larger errors in depth information. If the depth information of the targets is used for association analysis, false determinations may be made. However, the method described in the above steps S1031 to S1034 is to perform association analysis in the polar coordinate system, mainly using the radial distances and the angles, rather than the depth information. Therefore, the above false determination that may be caused by the error in the depth information can be avoided through the above method.

It should be noted that those skilled in the art can flexibly set the values of the fifth set threshold and the sixth set threshold according to actual needs. This is not specifically limited in this implementation.

In some implementations of the above step S 103, the radar perception targets are side-rear radar perception targets, and the visual perception targets are side-rear visual perception targets. The side-rear visual perception targets are visual perception targets obtained by performing target perception on images collected by a side-rear visual sensor, and the side-rear visual sensor is a visual sensor on the smart device that is used to collect side and/or rear images of the smart device. The side-rear radar perception targets are radar perception targets obtained by performing target perception on point clouds collected by a side-rear radar, and the side-rear radar is a radar located at a side end and/or a rear end of the smart device.

In this implementation, the association analysis of the side-rear radar perception targets and the side-rear visual perception targets may be performed through the following steps S1035 to S 1038.

Step S 1035: Obtain an intersection over union and a Euclidean distance between the side-rear radar perception target and the side-rear visual perception target.

Particularly, the forward radar perception target and the forward visual perception target can be converted into a global coordinate system (or a world coordinate system) based on their poses, and then the intersection over union and the Euclidean distance between the forward radar perception target and the forward visual perception target can be obtained.

Step S 1036: Determine whether the intersection over union is greater than a seventh set threshold and the Euclidean distance is less than an eighth set threshold. If the intersection over union is greater than the seventh set threshold and the Euclidean distance is less than the eighth set threshold, the process proceeds to step S 1037. If the intersection over union is not greater than the seventh set threshold or the Euclidean distance is not less than the eighth set threshold, the process proceeds to step S 1038.

Step S 1037: Determine that the side-rear radar perception target and the side-rear visual perception target are the same target. If the intersection over union is greater than the seventh set threshold, it indicates that there is a large overlap area between the side-rear radar perception target and the side-rear visual perception target; and if the European distance is greater than the eighth set threshold, it indicates that there is a small distance between the side-rear radar perception target and the side-rear visual perception target. When the overlap area is large and the distance is small, it indicates that the side-rear radar perception target and the side-rear visual perception target are the same point in the global coordinate system, and are thus the same target.

Step S1038: Determine that the side-rear radar perception target and the side-rear visual perception target are not the same target. When the overlap area is small and/or the distance is large, it indicates that the side-rear radar perception target and the side-rear visual perception target are not the same point in the global coordinate system, and are thus not the same target.

For side-rear targets (the visual perception targets and the radar perceptual perception targets), the focus is usually on targets that are relatively close to the smart device, i.e., close-range targets. Moreover, there is small error in depth information for the close-range visual perception targets, and if the depth information is used to perform association analysis on the close-range targets, there may be a low possibility to make a false determination. Therefore, for the close-range targets, the depth information can be used for association analysis. In the method described in the above steps S1035 to S 1038, depth information is used in calculating the intersection over union and the Euclidean distance. Therefore, the method is exactly a method of using the depth information to perform association analysis. Since the side-rear radar perception target and the side-rear visual perception target are three-dimensional and the global coordinate system is also three-dimensional, coordinate system conversion can be completed quickly when the side-rear radar perception target and the side-rear visual perception target are converted into the global coordinate system according to their poses, thus facilitating a quick and accurate determination of whether the side-rear radar perception target and the side-rear visual perception target are the same target.

It should be noted that those skilled in the art can flexibly set the values of the seventh set threshold and the eighth set threshold according to actual needs. This is not specifically limited in this implementation.

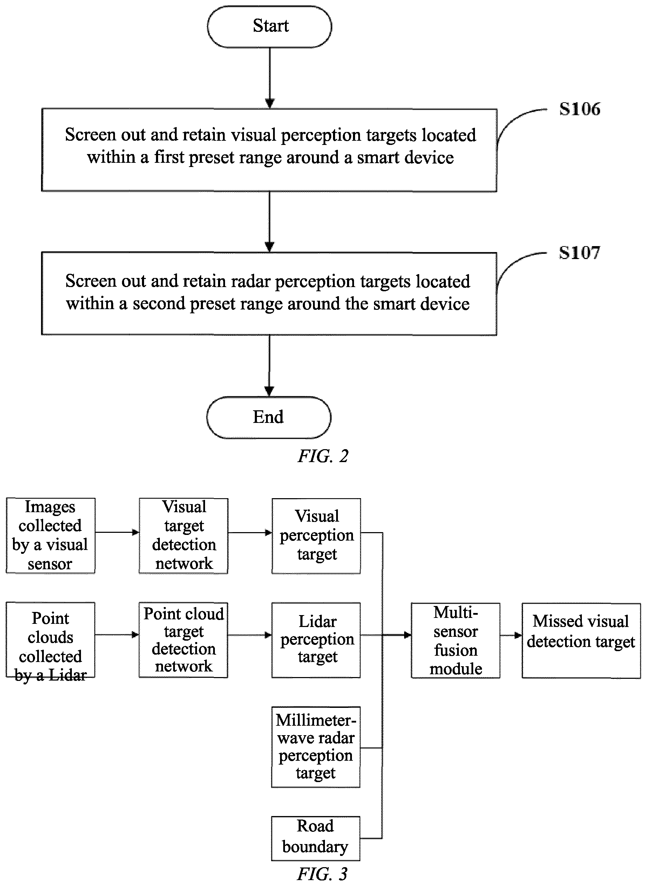

An embodiment of the method for obtaining missed visual detection targets according to the invention is further described below. Referring to FIG. 2, in some embodiments, prior to the association analysis of the radar perception targets and the visual perception targets (prior to execution of step S103), the radar perception targets and the visual perception targets may also be screened through the following steps S106 and S 107, to obtain as much as possible the missed visual detection targets that pose risks to the safe driving of the smart device.

Step S106: Screen out and retain visual perception targets located within a first preset range around the smart device.

Step S107: Screen out and retain radar perception targets located within a second preset range around the smart device.

By means of the method described in the above steps S 106 and S 107, targets located within a certain range of the smart device can be screened out, which may pose a higher risk to the safe driving of the smart device. Therefore, association analysis of these targets makes it possible to search for as much as possible missed visual detection targets that pose risks to the safe driving of the smart device.

The above steps S106 and S 107 are further described below.
1. Step S106 is described.

In some implementations of the above step S 106, the visual perception targets may include forward visual perception targets and/or side-rear visual perception targets. In this implementation, the visual perception targets may be screened out through the following steps S 1061 and S1062.

Step S1061: Obtain first lateral distances between the forward visual perception targets and the smart device, and screen out and retain forward visual perception targets whose first lateral distance are less than a first set threshold.

The direction of driving of the smart device is longitudinal, and the horizontal direction perpendicular to the longitudinal direction is lateral. The first lateral distance is the distance between the forward visual perception target and the smart device in the lateral direction of the smart device. If the first lateral distance is less than the first set threshold, it indicates that the current target is at a smaller lateral distance from the smart device, and poses a higher risk to the safe driving of the smart device. In this case, the current target is retained. In some implementations, forward visual perception targets whose first lateral distances are less than the first set threshold may also be screened again according to the category of the targets. For example, targets whose categories are vehicles and pedestrians can be screened out and retained, which pose a higher risk to the safe driving of the smart device.

Step S1062: Obtain first linear distances between the side-rear visual perception targets and the smart device, and screen out and retain side-rear visual perception targets whose first linear distance are less than a second set threshold.

The first linear distance may be a Euclidean distance. If the first linear distance is less than the second set threshold, it indicates that the current target is closer to the smart device and poses a higher risk to the safe driving of the smart device. In this case, the current target is retained. Targets that are far away from the smart device do not affect the safe driving of the smart device even if missed detection occurs, and thus do not need to be retained.

It should be noted that those skilled in the art can flexibly set the values of the first set threshold and the second set threshold according to actual needs. This is not specifically limited in this implementation.

Based on the method described in the above steps S 1061 and S1062, the visual perception targets that poses a higher risk to the safe driving of the smart device can be screened out accurately.

2. Step S 107 is described.

In some implementations of the above step S 107, the radar perception targets may include forward radar perception targets. The forward radar perception targets are radar perception targets obtained by performing target perception on point clouds collected by a forward radar, and the forward radar is a Lidar located at a front end of the smart device.

In this implementation, the forward radar perception targets may be screened out through the following steps S 1071 to S1073.

Step S1071: Obtain longitudinal distances, second lateral distances, and second linear distances between the forward radar perception targets and the smart device.

The direction of driving of the smart device is longitudinal, and the horizontal direction perpendicular to the longitudinal direction is lateral. The longitudinal distance is the distance between the forward radar perception target and the smart device in the longitudinal direction of the smart device. The second lateral distance is the distance between the forward radar perception target and the smart device in the lateral direction of the smart device. The second linear distance may be a Euclidean distance.

Step S 1072: Screen out and retain a forward radar perception target whose second linear distance is the smallest, that is, retain the forward radar perception target that is closest to the smart device.

Step S1073: Screen out and retain forward radar perception targets whose longitudinal distance are less than a third set threshold and/or whose second lateral distance are less than a fourth set threshold.

If the longitudinal distance is less than the third set threshold, it indicates that the current target is at a smaller longitudinal distance from the smart device and poses a higher risk to the safe driving of the smart device. In this case, the current target is retained. If the second lateral distance is less than the fourth set threshold, it indicates that the current target is at a smaller lateral distance from the smart device and also poses a higher risk to the safe driving of the smart device. In this case, the current target is retained.

In some implementations, forward radar perception targets whose longitudinal distances are less than the third set threshold and/or whose second lateral distances are less than the fourth set threshold may also be further screened according to the speed of the targets. According to the speed, it is determined whether there are moving targets among the targets, and then the moving targets among the above targets are retained. The moving targets such as pedestrians and vehicles usually pose a higher risk to the safe driving of the smart device. Therefore, these high-risk targets can be retained with this implementation.

It should be noted that those skilled in the art can flexibly set the values of the third set threshold and the fourth set threshold according to actual needs. This is not specifically limited in this implementation.

Based on the method described in the above steps S 1071 to S 1073, the forward radar perception targets that pose a higher risk to the safe driving of the smart device can be screened out accurately.

In some implementations of the above step S 107, the radar perception targets may include side-rear radar perception targets. The side-rear radar perception targets are radar perception targets obtained by performing target perception on point clouds collected by a side-rear radar, and the side-rear radar is a millimeter-wave radar located at a side end and/or rear end of the smart device.

In this implementation, the forward radar perception targets may be screened out through the following steps S1074 to S1076.

Step S 1074: Identify and remove ghost targets from the side-rear radar perception targets.

The side-rear radar perception targets are targets obtained using the millimeter-wave radar. In this implementation, the ghost targets can be identified from the side-rear radar perception targets by using a conventional ghost target identification method in the field of millimeter-wave radar technologies, and then removed.

For example, when a target is obtained for point clouds collected with the millimeter-wave radar, a confidence level of the target is also obtained, which can indicate a degree of credibility of the target. If the confidence level is low, the target also has a low confidence level, and it may be a ghost target. For this, a threshold can be set. If the confidence level is less than this threshold, the current target is determined as the ghost target.

For another example, in addition to the confidence level, the ghost target can also be identified in combination with a radar cross section (RCS), position information and speed information of the target, and other information.

The ghost target identification method is not specifically limited in this implementation, as long as the ghost target can be identified from the side-rear radar perception targets.

Step S1075: Obtain a road boundary of an environment in which the smart device is located.

Step S1076: Screen, from side-rear radar perception targets with the ghost targets removed, out and retain side-rear radar perception targets located between the smart device and the road boundary.

Outside the road boundary, there may be guardrails, green belts, etc., in which there are cluttered targets. Usually, the targets in these areas are static and pose little threat to the safe driving of the smart device. However, in the case of using the millimeter-wave radar for target detection, these targets may be falsely detected as moving targets, which may then threaten the safe driving of the smart device. To prevent the static targets outside the road boundary from being falsely detected as the moving targets, all the targets outside the road boundary can be removed directly.

Based on the method described in the above steps S 1074 to S 1076, the side-rear radar perception targets that poses a higher risk to the safe driving of the smart device can be screened out accurately.

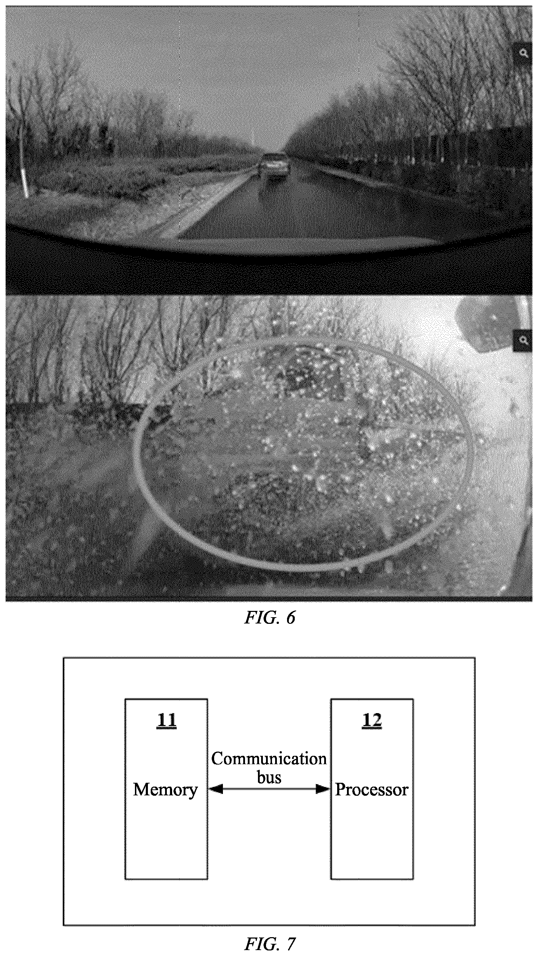

The embodiment of the method for obtaining missed visual detection targets according to the invention is described briefly below by taking the smart device being a vehicle as an example and in conjunction with FIG. 3 and FIG. 6. The vehicle is provided with a Lidar and a visual sensor (such as a camera) at a front end, and is provided with a millimeter-wave radar and a visual sensor (such as a camera) respectively at a side end and a rear end.

Referring to FIG. 3, FIG. 3 exemplarily shows a main flow of the method for obtaining missed visual detection targets. As shown in FIG. 3, images collected by the visual sensor are input into a visual target detection network to obtain a visual perception target. Point clouds collected by the Lidar are input into a point cloud target detection network to obtain a Lidar perception target. Target perception is performed on point clouds collected by the millimeter-wave radar to obtain a millimeter-wave radar perception target. The visual perception target, the Lidar perception target, the millimeter-wave radar perception target, a road boundary of an environment in which the vehicle is located are all input into a multi-sensor fusion module, and the missed visual detection target is found by this multi-sensor fusion module. The multi-sensor fusion module may be used to perform the method for obtaining missed visual detection targets as described in the foregoing method embodiments.

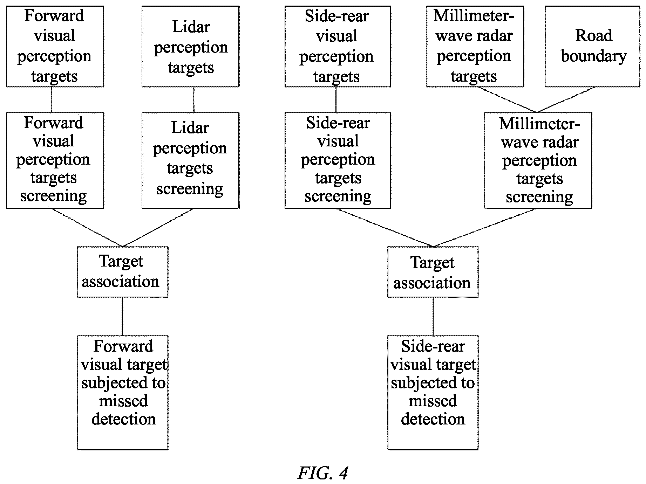

Referring to FIG. 4, FIG. 4 exemplarily shows a search for a missed visual detection target from forward visual perception targets and side-rear visual perception targets, which are separately described below.

### 1. Search for the missed visual detection targets from the forward visual perception targets

As shown in FIG. 4, the forward visual perception targets are obtained and screened, and Lidar perception targets are obtained and screened. Association analysis, i.e., target management, is performed on forward visual perception targets and Lidar perception targets that are screened out and retained, to determine whether the forward visual perception target and the Lidar perception target are the same target. If the forward visual perception target and the Lidar perception target are not the same target, the forward visual target subjected to missed detection is obtained from the Lidar perception target.

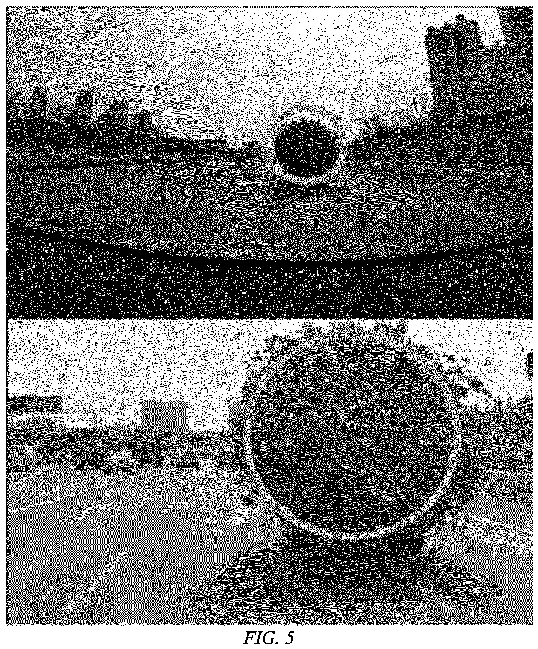

In an example, association analysis is performed on the Lidar perception target and a visual perception target of each frame of image among consecutive multi-frame images. After the association analysis, the Lidar perception target may be determined as the forward visual target subjected to missed detection. The pose of the Lidar perception target is converted onto an image to obtain a pose of the Lidar perception target on the image, and an image area where the pose is located is the area marked with a circle in FIG. 5. As shown in FIG. 5, there is a vehicle loaded with plants, i.e., a profiled vehicle, in this area.

### 2. Search for the missed visual detection targets from the side-rear visual perception targets

As shown in FIG. 4, the side-rear visual perception targets are obtained and screened, and millimeter-wave radar perception targets and the road boundary are obtained and the millimeter-wave radar perception targets are screened. Association analysis, i.e., target association, is performed on side-rear visual perception targets and millimeter-wave radar perception targets that are screened out and retained, to determine whether the side-rear visual perception target and the millimeter-wave radar perception target are the same target. If the side-rear visual perception target and the millimeter-wave radar perception target are not the same target, the side-rear visual target subjected to missed detection is obtained from the millimeter-wave radar perception target.

In an example, association analysis is performed on the millimeter-wave radar perception target and a visual perception target of each frame of image among consecutive multi-frame images. After the association analysis, the millimeter-wave radar perception target may be determined as the side-rear visual target subjected to missed detection. The pose of the millimeter-wave radar perception target is converted onto an image to obtain a pose of the millimeter-wave radar perception target on the image, and an image area where the pose is located is the area marked with a circle in FIG. 6. As shown in FIG. 6, there is a vehicle with water splashes in this area.

It should be noted that, although the steps are described in a specific order in the above embodiments, those skilled in the art may understand that in order to implement the effects of the invention, different steps are not necessarily performed in such an order, but may be performed simultaneously (in parallel) or in other orders. These adjusted solutions and the technical solutions described in the invention are equivalent technical solutions and shall all fall within the scope of protection of the invention.

Those skilled in the art may understand that all or some of the procedures in the methods in the above embodiments of the invention may be implemented by using a computer program instructing related hardware. The computer program may be stored in a computer-readable storage medium. When the computer program is executed by a processor, the steps in the above method embodiment may be implemented. The computer program includes computer program code, and the computer program code may be in the form of source code, target code, and an executable file, or in some intermediate forms, etc. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

According to another aspect of the invention, a computer-readable storage medium is further provided.

In an embodiment of the computer-readable storage medium according to the invention, the computer-readable storage medium may be configured to store a program for performing the method for obtaining missed visual detection targets in the above method embodiment, and the program may be loaded and executed by at least one processor to implement the above method for obtaining missed visual detection targets. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

According to another aspect of the invention, a smart device is further provided.

In an embodiment of the smart device according to the invention, the smart device may include: at least one processor; and a memory in communication connection with the at least one processor, where the memory stores a computer program that, when executed by the at least one processor, causes the processor to implement the method described in any of the above embodiments. The smart device described herein may include a driving device, a smart car, a robot, etc. Referring to FIG. 7, FIG. 7 exemplarily shows a communication connection established between a memory 11 and a processor 12 through a bus.

In some embodiments of the invention, the smart device may further include at least one sensor for sensing information. The sensor is in communication connection with any type of processor mentioned in the invention. Optionally, the smart device may further include an autonomous driving system configured to guide the smart device to drive autonomously or assist in driving. The processor is in communication with the sensor and/or the autonomous driving system, for performing the method described in any of the above embodiments.

Heretofore, the technical solutions of the invention have been described in combination with the implementations shown in accompanying drawings. However, those skilled in the art can readily understand that the scope of protection of the invention is apparently not limited to these particular implementations. Those skilled in the art can make equivalent changes or substitutions to the related technical features without departing from the principle of the invention, and all the technical solutions with such changes or substitutions shall fall within the scope of protection of the invention.

## Claims

1. A method for obtaining missed visual detection targets, which is applied to a smart device configured with a visual sensor and a radar, the method comprising:
performing target perception on images collected by the visual sensor, to obtain visual perception targets of the images;
performing target perception on point clouds collected by the radar, to obtain radar perception targets of the point clouds;
performing association analysis on the radar perception targets and the visual perception targets to determine whether the radar perception target and the visual perception target are the same target; and
obtaining a missed visual detection target from the radar perception target if the radar perception target and the visual perception target are not the same target.

2. The method according to claim 1, wherein
the performing association analysis on the radar perception targets and the visual perception targets comprises: obtaining a visual perception target of each frame of image among consecutive multi-frame images, and separately performing association analysis on the radar perception target and the visual perception target of each frame of image; and
the method further comprises: obtaining the missed visual detection target from the radar perception target if the radar perception target and the visual perception target of at least one frame of image are not the same target.

3. The method according to claim 1 or 2, wherein before the performing association analysis on the radar perception targets and the visual perception targets, the method further comprises:
screening out and retaining visual perception targets located within a first preset range around the smart device; and
screening out and retaining radar perception targets located within a second preset range around the smart device.

4. The method according to claim 3, wherein the visual perception targets comprise forward visual perception targets and/or side-rear visual perception targets, and the screening out and retaining visual perception targets located within a first preset range around the smart device comprises:
obtaining first lateral distances between the forward visual perception targets and the smart device, and screening out and retaining forward visual perception targets whose first lateral distance are less than a first set threshold; and
obtaining first linear distances between the side-rear visual perception targets and the smart device, and screening out and retaining side-rear visual perception targets whose first linear distance are less than a second set threshold,
wherein
the forward visual perception targets are visual perception targets obtained by performing target perception on images collected by a forward visual sensor, and the forward visual sensor is a visual sensor on the smart device that is used to collect forward images of the smart device; and
the side-rear visual perception targets are visual perception targets obtained by performing target perception on images collected by a side-rear visual sensor, and the side-rear visual sensor is a visual sensor on the smart device that is used to collect side images and/or rear images of the smart device.

5. The method according to claim 3 or 4, wherein the radar perception targets comprise forward radar perception targets, and the screening out and retaining radar perception targets located within a second preset range around the smart device comprises:
obtaining longitudinal distances, second lateral distances, and second linear distances between the forward radar perception targets and the smart device;
screening out and retaining a forward radar perception target with the smallest second linear distance; and
screening out and retaining forward radar perception targets whose longitudinal distance are less than a third set threshold and/or whose second lateral distance are less than a fourth set threshold,
wherein
the forward radar perception targets are radar perception targets obtained by performing target perception on point clouds collected by a forward radar, and the forward radar is a Lidar located at a front end of the smart device.

6. The method according to any one of claims 3 to 5, wherein the radar perception targets comprise side-rear radar perception targets, and the screening out and retaining radar perception targets located within a second preset range around the smart device comprises:
identifying and removing ghost targets from the side-rear radar perception targets;
obtaining a road boundary of an environment in which the smart device is located; and
screening, from side-rear radar perception targets with the ghost targets removed, out and retaining side-rear radar perception targets located between the smart device and the road boundary,
wherein
the side-rear radar perception targets are radar perception targets obtained by performing target perception on point clouds collected by a side-rear radar, and the side-rear radar is a millimeter-wave radar located at a side end and/or rear end of the smart device.

7. The method according to any one of claims 1 to 6, wherein the radar perception targets are forward radar perception targets, the visual perception targets are forward visual perception targets, and the performing association analysis on the radar perception targets and the visual perception targets comprises:
obtaining radial distances and angles between the forward radar perception targets and the forward visual perception targets in a polar coordinate system; and
determining the forward radar perception target and the forward visual perception target as the same target if the radial distance is less than a fifth set threshold and the angle is less than a sixth set threshold,
wherein
the forward visual perception targets are visual perception targets obtained by performing target perception on images collected by a forward visual sensor, and the forward visual sensor is a visual sensor on the smart device that is used to collect forward images of the smart device; and
the forward radar perception targets are radar perception targets obtained by performing target perception on point clouds collected by a forward radar, and the forward radar is a radar located at a front end of the smart device.

8. The method according to any one of claims 1 to 7, wherein the radar perception targets are side-rear radar perception targets, the visual perception targets are side-rear visual perception targets, and the performing association analysis on the radar perception targets and the visual perception targets comprises:
obtaining an intersection over union and a Euclidean distance between the side-rear radar perception target and the side-rear visual perception target; and
determining the side-rear radar perception target and the side-rear visual perception target as the same target if the intersection over union is greater than a seventh set threshold and the Euclidean distance is less than an eighth set threshold,
wherein
the side-rear visual perception targets are visual perception targets obtained by performing target perception on images collected by a side-rear visual sensor, and the side-rear visual sensor is a visual sensor on the smart device that is used to collect side and/or rear images of the smart device; and
the side-rear radar perception targets are radar perception targets obtained by performing target perception on point clouds collected by a side-rear radar, and the side-rear radar is a radar located at a side end and/or a rear end of the smart device.

9. A computer-readable storage medium storing a plurality of program codes, wherein the program codes are adapted to be loaded and executed by at least one processor to perform the method for obtaining missed visual detection targets according to any one of claims 1 to 8.

10. A smart device, comprising:
at least one processor;
and a memory in communication connection with the at least one processor,
wherein the memory stores a computer program that, when executed by the at least one processor, causes the processor to implement the method for obtaining missed visual detection targets according to any one of claims 1 to 8.
